# EUROPEAN PATENT SPECIFICATION

(11) **EP 2 380 769 B1**
(45) Date of publication and mention of the grant of the patent: **26.12.2012**
(21) Application number: 11161462.4
(22) Date of filing: 07.04.2011
(51) Int. Cl.: B60L 11/18

(54) **Output control apparatus for hybrid engine generator**
Ausgangssteuerungsvorrichtung für Hybridmotorgenerator
Dispositif de contrôle de la sortie d'un générateur pour un moteur hybride

(30) Priority: 26.04.2010 JP 2010100959
(43) Date of publication of application: 26.10.2011
(73) Proprietor: Honda Motor Co., Ltd., Tokyo 107-8556 (JP)
(72) Inventor: Hashizume, Takashi, Saitama 351-0193 (JP); Ogawa, Makoto, Saitama 351-0193 (JP); Ueno, Masanori, Saitama 351-0193 (JP)
(74) Representative: Herzog, Markus

(56) References cited:
- JP-A- 2003 244 999
- US-A- 5 373 196

## Description

### Technical Field

The present invention relates to an output control apparatus for a hybrid engine generator and particularly relates to an output control apparatus for a hybrid engine generator that is favorable for suppressing increase in rotation speed of an engine to reduce noise and improve fuel consumption.

### Background Art

A hybrid engine generator that includes a generator, which is driven by an engine, and a battery is known. For example, a power supply apparatus that performs optimal control of a power generation amount by changing an engine rotation speed and an excitation state of an external excitation coil of a generator in accordance with an actuation state of an electrical apparatus that is a load and a charging state of a battery is disclosed by Patent Document 1.

### Citation List

### Patent Document

Patent Document 1 "Japanese Published Unexamined Patent Publication No. 2003-244999"

US 5 373 196 discloses a vehicle electric power system with a power converter which receives its input power either from an alternator or a battery.

### Summary of Invention

### Technical Problem

With a conventional hybrid engine generator, the engine rotation speed is increased in accordance with increase in a load output even in a region in which power generation output by the battery is enabled, and there is thus an issue that an engine operation noise becomes large and fuel consumption increases in a state where the load output is large and improvement in regard to this issue is desired.

An object of the present invention is to provide, in response to the above issue, an output control apparatus for a hybrid engine generator that can maximally avoid increase in engine rotation speed due to increase in a load output to thereby reduce engine operation noise and improve fuel consumption.

### Solution to Problem

For solving the object, the invention provides an output control apparatus for a hybrid power generator in accordance with claim 1.

In a first feature of the present invention, the output control apparatus for a hybrid power generator includes a battery and an alternator driven by an engine, the output control apparatus for a hybrid power generator comprising: a load output detecting unit detecting a load output of the generator; a battery output detecting unit detecting an output from the battery; an alternator output detecting unit detecting an output of the alternator; a first output difference computing unit computing a difference (first difference) of the output of the alternator with respect to the load output; a threshold setting unit setting a battery output stopping threshold; and a controller, which, when the battery output is greater than the battery output stopping threshold, fixes the output of the alternator at a predetermined value and compensates for the first difference by the battery output.

In a second feature of the present invention is that, in addition to the first feature, the output control apparatus for a hybrid power generator further includes a second output difference computing unit computing a difference (second difference) of the output from the battery with respect to the load output; and wherein the controller includes an engine rotation speed controller that, in order to compensate for the second difference, makes the engine rotation speed converge at a target engine rotation speed value determined using a first map in which a relationship of the second difference and the target engine rotation speed value is set.

A third feature of the present invention is that the threshold setting unit is set as a battery output enabling time corresponding to the battery output stopping threshold, the battery output enabling time is set in relation to the battery output in a second map so as to be longer value the greater the battery output, and the controller is arranged to increase the engine rotation speed to compensate for the second difference when the battery output enabling time has elapsed from a start of output of the battery.

A fourth feature of the present invention is the output control apparatus for a hybrid power generator, comprising: a charging unit charging the battery by the output of the alternator; and a unit detecting a remaining capacity of the battery; and wherein the controller is arranged to stop the output of the battery and increase the engine rotation speed to charge the battery when the remaining capacity of the battery is no more than a predetermined value, and to start the output of the battery and decrease the engine rotation speed in accordance with the increase in the battery output at a point in time at which the remaining capacity of the battery is restored to no less than the predetermined value.

### Advantageous Effects of Invention

According to the first aspect of the present invention, in a range in which the battery output is no less than the battery output stopping threshold, the engine rotation speed is fixed so that a fixed alternator output is generated and a deficit is compensated for by the battery output. While the deficit of the load output due to the alternator output, which is of the fixed value, can be compensated for by the battery output, the engine rotation speed is not increased and thus increase in operation noise can be suppressed and fuel consumption can be improved.

Also, according to the second aspect of the present invention, in a range in which the battery output is less than the battery output stopping threshold, while the battery output is reduced, the engine rotation speed is gradually increased accordingly to increase the alternator output, and thus degradation of engine noise quality due to sudden rise of the engine rotation speed can be prevented and improvement in exhaust emission can be achieved.

Also, according to the third aspect of the present invention, the battery output stopping threshold is set to the battery output enabling time that is related to the battery output and a range in which the battery output is enabled can thus be controlled according to time.

Further, according to the fourth aspect of the present invention, when the remaining battery capacity is low, the output from the battery is stopped and the engine rotation speed is increased to increase the alternator output and charge the battery by the alternator output that is made to be in excess with respect to the load output, thereby re-enabling the battery output.

### Brief Description of Drawings

FIG. 1 is a block diagram of a system arrangement of a generator that includes an output control apparatus according to an embodiment of the present invention.
FIG. 2 is a specific circuit diagram of the output control apparatus shown in FIG. 1.
FIG. 3 is a circuit diagram of an isolation-type DC-DC converter.
FIG. 4 is a flowchart of an operation of the output control apparatus.
FIG. 5 is an operation timing chart of the output control apparatus.
FIG. 6 is a block diagram of principal functions of the output control apparatus.

### Description of Embodiments

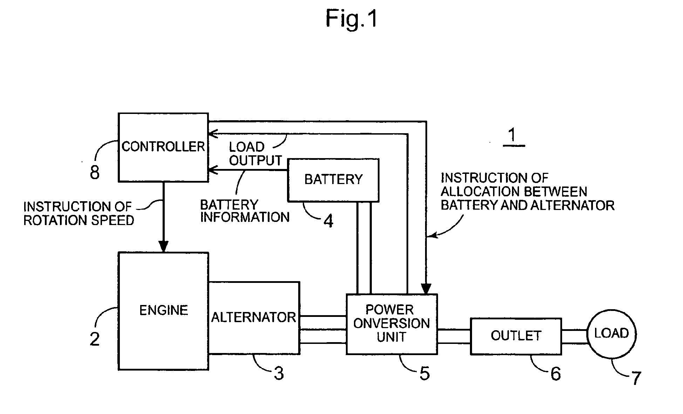

An embodiment of the present invention shall now be described with reference to the drawings. FIG. 1 is a system arrangement diagram of a hybrid engine generator that includes an output control apparatus according to an embodiment of the present invention. In FIG. 1, the hybrid engine generator 1 includes an alternator 3 coupled to an engine 2 that is a first power source, and a battery 4 that is a second power source. The alternator 3 is a motor-generator that is driven by the engine 2 to generate power and can also be operated as a starting motor for the engine 2 and is arranged, for example, from a three-phase multipolar magnetic generator.

Output sides of the alternator 3 and the battery 4 are connected to a power conversion unit 5, and an output side of the power conversion unit 5 is connected to an output terminal for example, an outlet 6. A load 7 is connected to the outlet 6.

A controller 8 includes a microcomputer, detects a load output and battery information, such as a remaining capacity of the battery 4, etc., and instructs output allocation between the battery 4 and the alternator 3 to the power conversion unit 5 and a rotation speed to the engine 2.

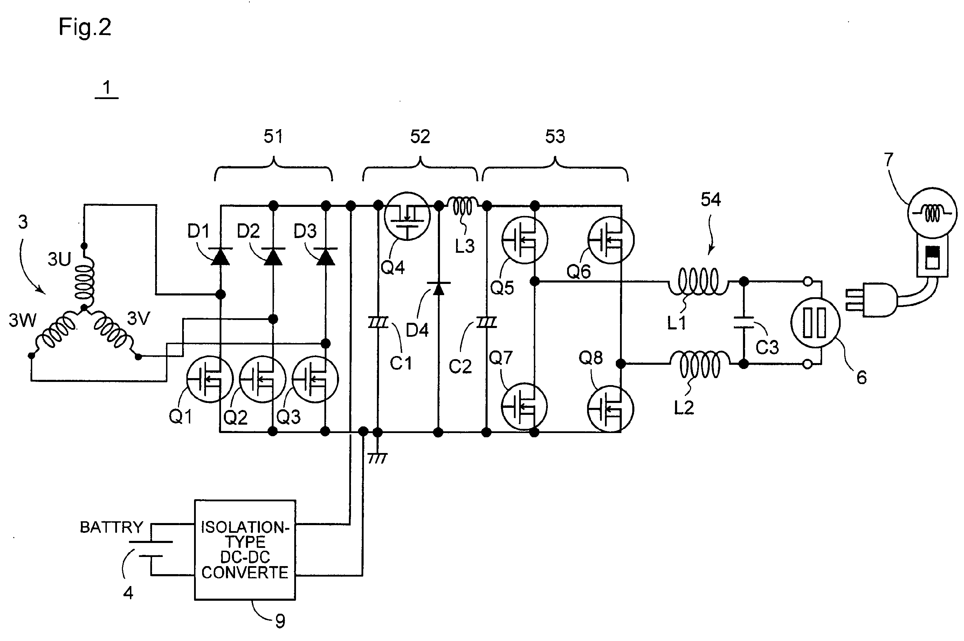

FIG. 2 is a specific circuit diagram of the hybrid engine generator 1. The power conversion unit 5 includes a rectifier unit 51, a DC unit 52, an inverter unit 53, and a waveform shaping circuit 54. The rectifier unit 51 is a hybrid bridge rectifier circuit that includes diodes D1, D2, and D3 and switching elements (hereinafter explained as "FETs") Q1, Q2, and Q3 that are bridge-connected. A winding 3U of the alternator 3 is connected to a junction of the diode D1 and the FET Q1, a winding 3V is connected to a junction of the diode D2 and the FET Q2, and a winding 3W is connected to a junction of the diode D3 and the FET Q3, respectively.

The rectifier unit 51 that is thus arranged rectifies and supplies the output of the alternator 3 to the DC unit 52 and also functions as a drive inverter that converts a DC output voltage of the battery 4 to a three-phase AC voltage by on/off control of the FETs Q1 to Q3 and applies the AC voltage to the alternator 3.

The battery 4 is connected between the rectifier unit 51 and DC unit 52 via an isolation-type DC-DC converter 9. The isolation-type DC-DC converter 9 is a bidirectional DC-DC converter between the battery 4 and the rectifier unit 51 and provides power to the battery 4 and the rectifier unit 51 bidirectionally and, as shall be described below, is arranged from a primary side and a secondary side that are connected via an isolation unit (transformer).

The DC unit 52 is a switching converter (a step-down type in the present embodiment) and includes an FET Q4, a choke coil L3, capacitors C1 and C2, a diode D4, etc. The inverter unit 53 is arranged by bridge connection of four FETs Q5, Q6, Q7, and Q8. An output of the inverter unit 53 is connected to the waveform shaping circuit 54, which is arranged from coils L1 and L2 and a capacitor C3. The FETs Q1 to Q3, Q4, and Q5 to Q8 is controlled by instructions from the controller 8.

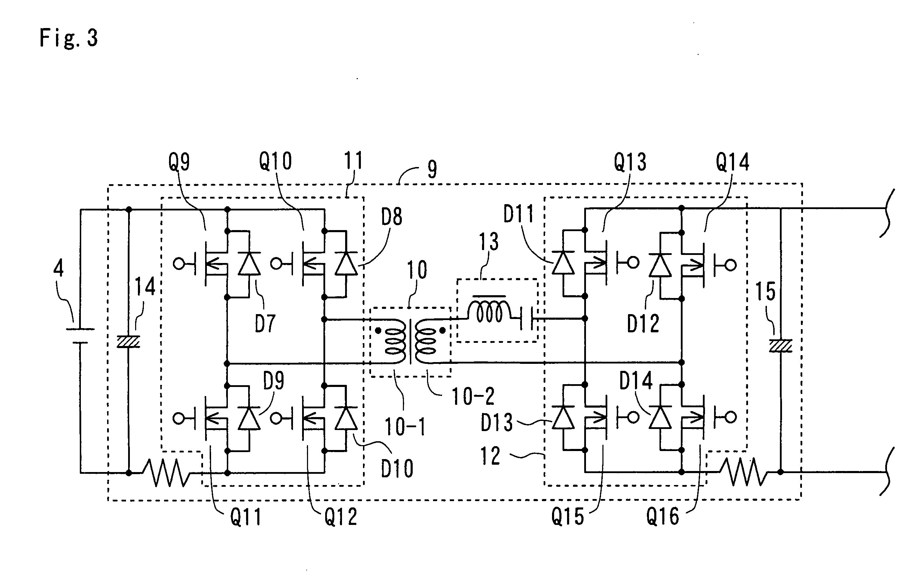

FIG. 3 is a circuit diagram of an arrangement example of the isolation-type DC-DC converter 9. The isolation-type DC-DC converter 9 includes a transformer 10 having a primary low voltage side winding 10-1 and a secondary high voltage side winding 10-2. A step-up ratio of the isolation-type DC-DC converter 9 is determined by a winding ratio of the low voltage side winding 10-1 to the high voltage side winding 10-2.

A low voltage side switching unit 11 is inserted at the low voltage side winding 10-1 side and a high voltage side switching unit 12 is inserted at the high voltage side winding 10-2 side. The low voltage side switching unit 11 is arranged, for example, by bridge connection of four FETs Q9, Q10, Q11, and Q12, and the high voltage side switching unit 12 is likewise arranged by bridge connection of four FETs Q13, Q14, Q15, and Q16.

Diodes D7, D8, D9, and D10 and diodes D11, D12, D13, and D14 are respectively connected in parallel to the FETs Q9 to Q16 of the low voltage side switching unit 11 and the high voltage side switching unit 12. These diodes may be parasitic diodes of the FETs, or may be independently connected diodes parallel to the FETs. Together with the rectifier elements D7 to D14 that are connected in parallel, the low voltage side switching unit 11 and the high voltage side switching unit 12 may be considered as being switching/rectifier units, respectively.

An LC oscillator circuit 13 is inserted at the high voltage side winding 10-2 side of the transformer 10. The LC oscillator circuit 13 makes a current, which flows when at least one of either the low voltage side switching unit 11 or the high voltage side switching unit 12 is driven, have a sinusoidal form and thereby functions to reduce switching loss and prevent FET breakdown due to a large current. This is because the FETs can be switched on and off near zero cross points of the sinusoidal current. The LC oscillator circuit 13 may be provided at the primary side instead of at the secondary side.

Switching control of the FETs Q9 to Q12 of the low voltage side switching unit 11 and the FETs Q13 to Q16 of the high voltage side switching unit 12 is performed by the controller 8. The capacitors 14 and 15 that are connected to the primary side and the secondary side are output smoothing capacitors.

During operation, the low voltage side switching unit 11 and the high voltage side switching unit 12 are driven by the same signal and synchronized completely so that the isolation-type DC-DC converter 9 performs bidirectional power conversion automatically As is well-known, this drive is performed by alternately turning on and off the pair of FETs Q9 and Q12 and the pair of FETs Q10 and Q11 at the low voltage side switching unit 11 and alternately turning on and off the pair of FETs Q13 and Q16 and the pair of FETs Q14 and Q15 at the high voltage side switching unit 12.

In startup of the engine, power conversion from the primary side to the secondary side of the isolation-type DC-DC converter 9 is performed, and the DC voltage of the battery 4 that is thereby stepped up is provided to the rectifier unit 51 serving as the drive inverter. The rectifier unit 51 performs PWM drive of Q1 to Q6 in a well-known manner and thereby converts the input DC voltage to a three-phase AC voltage and applies the AC voltage to the alternator 3. The engine 2 is thereby started. In this process, change of current distribution by a back voltage that arises in accordance with the operation of the alternator 3 can be used to judge the phase and perform synchronous drive by sensorless control.

When the engine 2 is started, the alternator 3 is driven by the engine to generate an output. At this point, the FETs Q1 to Q3 of the rectifier unit 51 are not driven and the output of the alternator 3 is rectified by the diodes D1 to D3 of the rectifier unit 51.

The output voltage of the rectifier unit 51 is smoothened and adjusted by the DC unit 52 and further converted to an AC power of a predetermined frequency (for example, the commercial power frequency) at the inverter unit 53. At the DC unit 52, PWM of the FET Q4 is performed in accordance with an operation signal from the controller 8.

The isolation-type DC-DC converter 9 is a bidirectional DC-DC converter and thus if the remaining capacity of the battery 4 is less than a predetermined value and the output of the alternator 3 is adequate, the battery 4 is charged by the output voltage of the rectifier unit 51 being stepped down by the isolation-type DC-DC converter 9 and input into the battery 4. Also, in a case where the remaining capacity of the battery 4 is high, power from the battery 4 is also supplied to the load through the isolation-type DC-DC converter 9 to compensate (assist) the output power of the alternator 3.

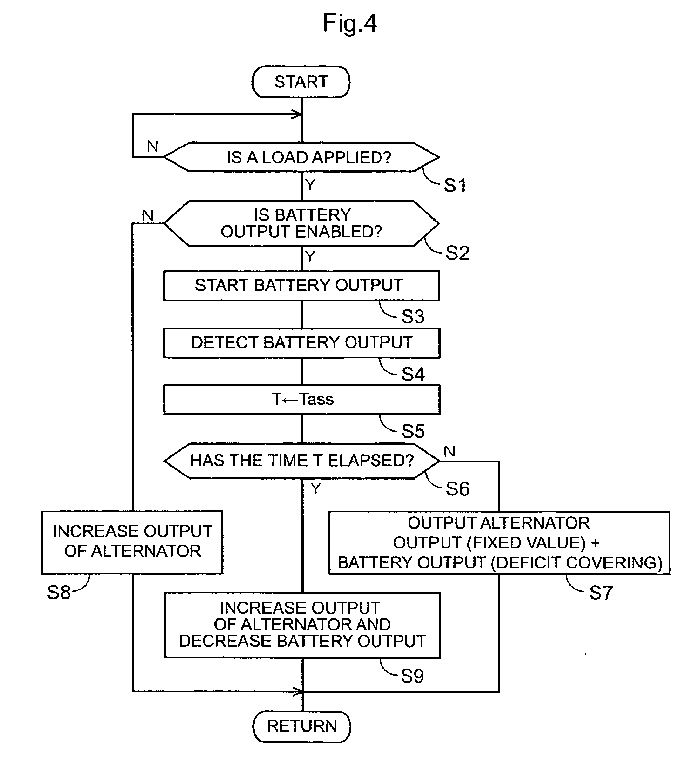

Next, output control of the hybrid engine generator 1 shall be described. FIG. 4 is a flowchart of an output control operation. This operation can be realized by the microcomputer inside the controller 8. In an initial state in FIG. 4, the engine 2 is started and the alternator 3 is in an output-enabled state. In step S1 of FIG. 4, it is determined whether or not a load is connected. Whether or not a load is connected can be determined by the presence or non-presence of an AC output current at the power conversion unit 5. If a load is connected, step S2 is entered to determine whether or not the output of the battery 4 is enabled. This is determined according to whether or not a remaining capacity (as represented by the output voltage) of the battery 4 is no less than a predetermined value (for example, in a fully charged state).

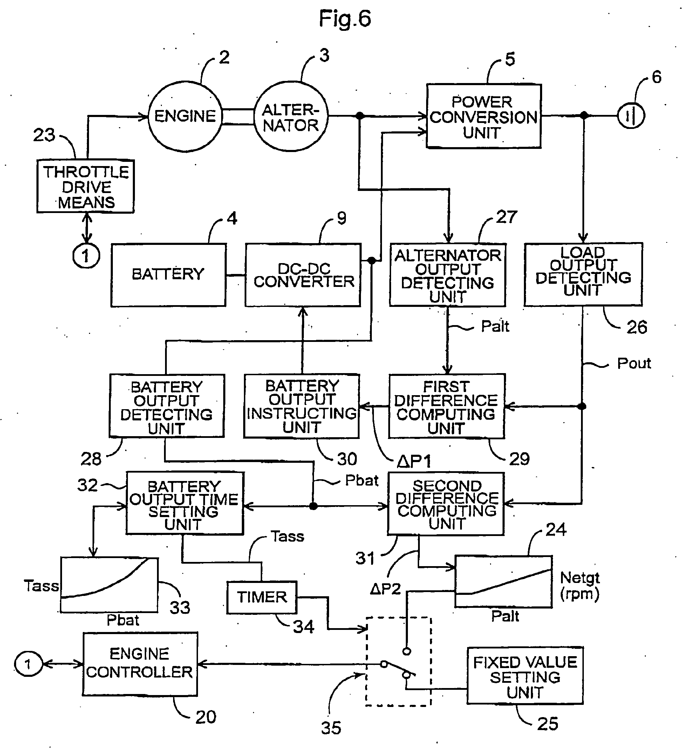

If an affirmative determination is made in step S2, step S3 is entered to control the isolation-type DC-DC converter 9 to start the output of the battery 4. In step S4, the battery output is detected. In step S5, a battery assist time (hereinafter referred to simply as "assist time") Tass corresponding to the detected battery output power is computed and set in a timer T. The assist time Tass can be computed using a map in which a relationship of the battery output power and the assist time Tass is set in advance (see FIG. 6). The timer T measures an elapsed time by an unillustrated timer process routine.

In step S6, it is judged whether or not the output time of the battery 4 is expired, that is, whether or not the assist time Tass has elapsed and the time set at the timer T has run up. Until the time is up at the timer T, step S7 is entered and output is performed with the output of the battery 4 being added to the output of the alternator 3. The output of the battery 4 corresponds to a deficit of the output of the alternator 3 with respect to the load output. The engine 2 is driven at a predetermined engine rotation speed for generating a fixed value output that has been set in advance and the alternator 3 rotates accordingly to generate power. The output power of the battery 4 is thus equal to (load output-alternator output), that is, a first difference.

If a negative determination is made in step S2, that is, if the remaining capacity of the battery 4 is less than the predetermined value, step S8 is entered and the engine rotation speed is increased to increase the output of the alternator 3. In this process, the engine rotation speed is determined according to a required output of the alternator 3. First, a difference (second difference) between the load output and the output power of the battery 4 is computed as the required output of the alternator 3. The engine rotation speed for obtaining this difference, that is, the required output of the alternator 3 is then computed. The engine rotation speed can be computed using a map in which a relationship of the output power of the alternator 3 and the engine rotation speed is set in advance (see FIG. 6).

While the output power of the alternator 3 is increased, the output of the battery 4 is decreased or stopped to achieve increase in the remaining capacity of the battery 4. When the remaining capacity of the battery 4 is restored, an affirmative determination is made in step S2 and thus step S3 is entered to start the output of the battery 4.

When an affirmative judgment is made in step S6, that is, after the power output from battery 4 has been maintained until the assist time Tass has elapsed, it is judged that the remaining battery capacity has decreased to a battery output stopping threshold and step S9 is entered. In step S9, the engine rotation speed is increased to increase the output of the engine 2 in order to restore the remaining capacity of the battery 4. The process of step S9 differs from that of step S8 in that the increase in the engine rotation speed is increased gradually to obtain the alternator output that matches the decrease in the battery output.

Thus in the present embodiment, in a range in which the remaining capacity of the battery 4 is adequate, the deficit of the output power of the alternator 3 due to increase in the load is compensated for by the output power of the battery 4. On the other hand, when it is judged that the remaining capacity of the battery 4 has decreased to the battery output stopping threshold, the output of the alternator 3 is increased and the output of the battery 4 is decreased relatively. In increasing the output of the alternator 3, the engine rotation speed is increased gradually in accordance with the output decrease in the battery 4.

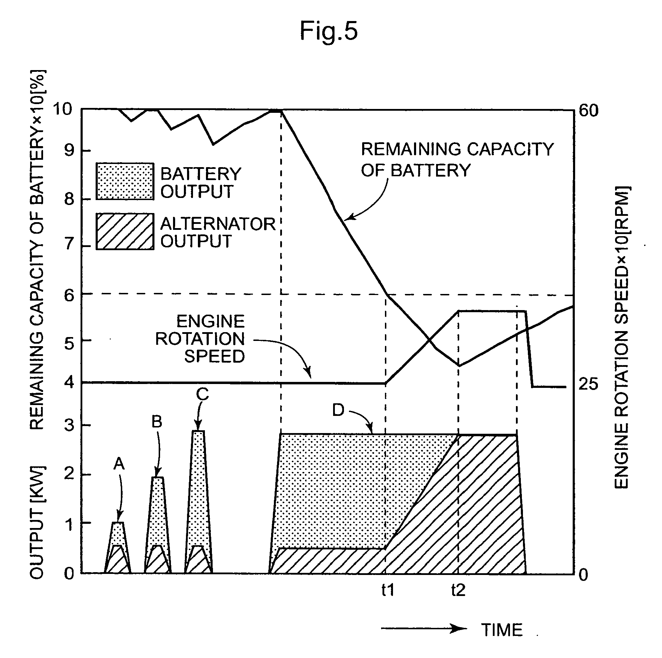

FIG. 5 is a timing chart of the above-mentioned output control. In FIG. 5, an abscissa is a time axis, and an ordinate indicates the respective outputs (kw) of the alternator 3, the battery 4, and the load, the remaining battery capacity (x%), and the engine rotation speed (rpm).

In FIG. 5, load outputs A, B, C, and D arise. The load outputs A, B, and C correspond to short-duration loads, and the load output D corresponds to a load of somewhat long duration. Regardless of the durations and output magnitudes of the load outputs, the engine rotation speed is fixed (at 4000rpm in the present example) and thus the output of the alternator 3 is fixed (at 0.5kw in the present example). The differences (first differences) between the load outputs A, B, C, and D and the output of the alternator 3 are compensated for by the output of the battery 4.

When the output from the battery 4 continues and the remaining capacity decreases to no more than the battery output stopping threshold (60% in the present example) at a timing t1, the load output D can no longer be compensated for by the output of the battery 4 and thus the engine rotation speed is increased to increase the output of the alternator 3. It can be understood that the engine rotation speed is increased gradually between timings t1 and t2 in accordance with the lowering of the share of the output power of the battery 4 in the load output D.

FIG. 6 is a block diagram of principal functions of the controller 8. In FIG. 6, an engine controller 20 determines a throttle instruction value so that the engine rotation speed Ne converges at a target engine rotation speed value Netgt and supplies the instruction value to a drive unit (arranged from a motor, linear solenoid, or other known drive means) 23 of an unillustrated throttle valve. The target engine rotation speed value Netgt is set in relation to the alternator output Palt in a second map 24 or in a fixed value setting unit 25, is selected by switching of a switching unit 35, and read into the engine controller 20.

A load output detecting unit 26 detects an output power (load output) Pout to the load connected to an output terminal (outlet) 6. An alternator output detecting unit 27 detects the power (alternator output) Palt output from the alternator 3. A battery output detecting unit 28 detects the power (battery output) Pbat output from the battery 4. A first difference computing unit 29 computes the difference (first difference) ΔP1 of the alternator output Palt with respect to the load output Pout. A battery output instructing unit 30 controls the isolation-type DC-DC converter 9 so as to compensate for the first difference ΔP 1 by the battery output Pbat.

A second difference computing unit 31 computes the difference (second difference) ΔP2 of the battery output Pbat with respect to the load output Pout. A battery output time setting unit 32 detects the assist time Tass, during which output of the battery 4 is enabled from a predetermined charged state (for example, the fully charged state), from a first map 33 and sets the assist time Tass in a timer 34. The first map 33 sets the relationship between the battery output Pbat and the assist time Tass and outputs the assist time Tass according to the current battery output Pbat. The timer 34 starts time measurement upon setting the assist time Tass as a timer value T.

The relationship of the required alternator output Palt and the target engine rotation speed value Netgt is set in the second map 24. That is, the required alternator output Palt corresponds to the second difference ΔP2 by which the load output Pout cannot be compensated for by the battery output Pbat, and the target engine rotation speed value Netgt is the target engine rotation speed value required to compensate for the second difference ΔP2 by the alternator output Palt. The second map 24 thus outputs the target engine rotation speed value Netgt corresponding to the input second difference ΔP2. A target engine rotation speed Netgt of, for example, approximately 4000rpm is stored in the fixed value setting unit 25.

Until the time is up at the timer 34, a switch 35 is switched to the fixed value setting unit 25 side and the fixed value is outputted as the target engine rotation speed value Netgt to the engine controller 20. On the other hand, after the time is up at the timer 34, the target engine rotation speed value Netgt is read from the second map 24 and the value Netgt is outputted to the engine controller 20.

Thus by the present embodiment, the output power from the battery is utilized adequately when the battery is in the output enabled range and the engine rotation speed is increased gradually when the load output exceeds the output enabled range of the battery, thereby enabling improvements to be made in regard to engine operation noise and fuel consumption.

Although the present invention has been described in accordance with the embodiment, the present invention is not restricted to the embodiment and modifications are possible based on the matters described in the claims and the known art.

### Reference Signs List

1 ... hybrid engine generator
2 ... engine
3 ... alternator
4 ... battery
5 ... power conversion unit
7 ... load
8 ... controller
9 ... isolation-type DC-DC converter
24 ... second map
29 ... first difference computing unit
31 ... second difference computing unit
32 ... battery output time setting unit (threshold setting unit)
33 ... first map

Suppresses noise due to high engine speed and improves emission and fuel consumption of a hybrid generator (1). A difference computing unit (29) computes a first difference between an alternator output and a load output. A difference computing unit (31) computes a second difference between a battery output and the load output. When the battery output is greater than a battery output stopping threshold, the alternator output is fixed and the first difference is compensated for by the battery output. When the battery output is less than the battery output stopping threshold, the engine speed is increased to compensate for the second difference by the output of the alternator (3). To compensate for the second difference, a target engine speed is determined using a relationship of the second difference and the target engine speed. The engine speed is converged at the target engine speed.

## Claims

1. An output control apparatus for a hybrid power generator, which includes a battery (4) and an alternator (3) driven by an engine (2), the output control apparatus for a hybrid power generator comprising:
a power conversion unit (5) to which the output from the battery (4) and the output of the alternator (3) are connected with the input side of the power conversion unit (5) a load (6) is connected with the output side of the power conversion unit (5),
a load output detecting unit (26) that is connected with the output side of the power conversion unit (5) and detecting a load output (Pout) of the generator;
a battery output detecting unit (28) detecting an output (Pbat) from the battery (4);
an alternator output detecting unit (27) detecting an output (Palt) of the alternator (3);
a first output difference computing unit (29) computing a first difference (ΔP1) of the output (Palt) of the alternator (3) with respect to the load output (Pout);
a threshold setting unit (32) setting a battery output (Pbat) stopping
threshold; and
a controller (20), which, when the battery output is greater than the battery output stopping threshold, fixes the output (Palt) of the alternator (3) at a predetermined value (25) and compensates for the first difference (ΔP1) by the battery output (Pbat).

2. An output control apparatus for a hybrid power generator according to Claim 1, further comprising:
a second output difference computing unit (31) computing a second difference (ΔP2) of the output (Pbat) from the battery (4) with respect to the load output (Pout); and
the controller further comprising a means, which, when the battery output (Pbat) is less than the battery output stopping threshold, increases the engine rotation speed to compensate for the second difference (ΔP2) by the output of the alternator (3);
wherein the controller includes an engine rotation speed controller (20) that,
in order to compensate for the second difference (ΔP2), makes the engine rotation speed converge at a target engine rotation speed value determined using a second map (24) in which a relationship of the second difference (ΔP2) and the target engine rotation speed value (Netgt) is set.

3. The output control apparatus for a hybrid power generator according to Claim 2, wherein the threshold setting unit (32) is set as a battery output enabling time corresponding to the battery output stopping threshold, the battery output enabling time is set in relation to the battery output in a first map (33) so as to be longer value the greater the battery output (Pbat), and the controller is arranged to increase the engine rotation speed to compensate for the second difference (ΔP2) when the battery output enabling time (Tass) has elapsed from a start of output of the battery (4).

4. The output control apparatus for a hybrid power generator according to Claim 2, comprising: a charging unit (5) charging the battery (4) by the output of the alternator (3); and
a unit detecting a remaining capacity of the battery (4); and
wherein the controller is arranged to stop the output of the battery (4) and increase the engine rotation speed to charge the battery (4) when the remaining capacity of the battery (4) is no more than a predetermined value, and to start the output of the battery (4) and decrease the engine rotation speed in accordance with the increase in the battery output at a point in time at which the remaining capacity of the battery (4) is restored to no less than the predetermined value.

5. The output control apparatus for a hybrid power generator according to Claim 3, comprising: a charging unit (5) charging the battery (4) by the output of the alternator (3); and
a unit detecting a remaining capacity of the battery (4); and
wherein the controller is arranged to stop the output of the battery (4) and increase the engine rotation speed to charge the battery (4) when the remaining capacity of the battery (4) is no more than a predetermined value, and to start the output of the battery (4) and decrease the engine rotation speed in accordance with the increase in the battery output at a point in time at which the remaining capacity of the battery (4) is restored to no less than the predetermined value.

## Patentansprüche

1. Ausgabesteuerungsvorrichtung für einen Hybridstromgenerator, der eine Batterie (4) und einen von einem Motor (2) angetriebenen Wechselstromgenerator (3) enthält, wobei die Ausgabesteuerungsvorrichtung für einen Hybridstromgenerator umfasst:
eine Stromwandlereinheit (5), wobei der Ausgang von der Batterie (4) und der Ausgang von dem Wechselstromgenerator (3) mit der Eingangsseite der Stromwandlereinheit (5) verbunden sind, und eine Last (6) mit der Ausgangsseite der Stromwandlereinheit (5) verbunden ist, eine Lastausgabeerfassungseinheit (26), die mit der Ausgangsseite der Stromwandlereinheit (5) verbunden ist und eine Lastausgabe (Pout) des Generators erfasst;
eine Batterieausgabeerfassungseinheit (28), die eine Ausgabe (Pbat) von der Batterie (4) erfasst;
eine Wechselstromgeneratorausgabeerfassungseinheit (27), die eine Ausgabe (Palt) des Wechselstromgenerators (3) erfasst;
eine erste Ausgabedifferenzberechnungseinheit (29), die eine erste Differenz (ΔP1) der Ausgabe (Palt) des Wechselstromgenerators (3) in Bezug auf die Lastausgabe (Pout) berechnet;
eine Schwellenwertsetzeinheit (32), die einen Batterieausgabe(Pbat)-Stoppschwellenwert setzt; und
einen Controller (20), der, wenn die Batterieausgabe größer als der Batterieausgabe-Stoppschwellenwert ist, die Ausgabe (Palt) des Wechselstromgenerators (3) auf einen vorbestimmten Wert (25) festlegt und die erste Differenz (ΔP1) durch die Batterieausgabe (Pbat) kompensiert.

2. Ausgabesteuerungsvorrichtung für einen Hybridstromgenerator nach Anspruch 1, die ferner umfasst:
eine zweite Ausgabedifferenzberechnungseinheit (31), die eine zweite Differenz (ΔP2) der Ausgabe (Pbat) von der Batterie (4) in Bezug auf die Lastausgabe (Pout) berechnet; und
der Controller ferner ein Mittel aufweist, das, wenn die Batterieausgabe (Pbat) niedriger als der Batterieausgabe-Stoppschwellenwert ist, die Motordrehzahl erhöht, um die zweite Differenz (ΔP2) durch die Ausgabe des Wechselstromgenerators (3) zu kompensieren;
worin der Controller einen Motordrehzahlcontroller (20) enthält, der, um die zweite Differenz (ΔP2) zu kompensieren, bewirkt, dass die Motordrehzahl auf einen Sollmotordrehzahlwert konvergiert, der mittels eines zweiten Kennfelds (24) bestimmt wird, worin eine Beziehung der zweiten Differenz (ΔP2) und des Sollmotordrehzahlwerts (Netgt) gesetzt ist.

3. Die Ausgabesteuerungsvorrichtung für einen Hybridstromgenerator nach Anspruch 2, worin die Schwellenwertsetzeinheit (32) eine Batterieausgabefreigabezeit entsprechend des Batterieausgabe-Stoppschwellenwert setzt, wobei die Batterieausgabefreigabezeit in Bezug auf die Batterieausgabe in einem ersten Kennfeld (33) gesetzt ist, so dass sie einen umso längeren Wert hat, je größer die Batterieausgabe (Pbat) ist, und der Controller angeordnet ist, um die Motordrehzahl zu erhöhen, um die zweite Differenz (ΔP2) zu kompensieren, wenn die Batterieausgabefreigabezeit (Tass) seit dem Start der Ausgabe der Batterie (4) abgelaufen ist.

4. Die Ausgabesteuerungsvorrichtung für einen Hybridstromgenerator nach Anspruch 2, umfassend: eine Ladeeinheit (5), die die Batterie (4) durch die Ausgabe des Wechselstromgenerators (3) lädt; und
eine Einheit, die eine Restkapazität der Batterie (4) erfasst; und
worin der Controller angeordnet ist, um die Ausgabe der Batterie (4) zu stoppen und die Motordrehzahl anzuheben, um die Batterie (4) zu laden, wenn die Restkapazität der Batterie (4) nicht größer als ein vorbestimmter Wert ist, und um die Ausgabe der Batterie (4) zu starten und um die Motordrehzahl gemäß zunehmender Batterieausgabe zu einem Zeitpunkt zu senken, an dem die Restkapazität der Batterie (4) auf nicht weniger als der vorbestimmte Wert wiederhergestellt ist.

5. Die Ausgabesteuerungsvorrichtung für einen Hybridstromgenerator nach Anspruch 3, umfassend: eine Ladeeinheit (5), die die Batterie (4) durch die Ausgabe des Wechselstromgenerators (3) lädt; und
eine Einheit, die eine Restkapazität der Batterie (4) erfasst; und
worin der Controller angeordnet ist, um die Ausgabe der Batterie (4) zu stoppen und die Motordrehzahl anzuheben, um die Batterie (4) zu laden, wenn die Restkapazität der Batterie (4) nicht größer als ein vorbestimmter Wert ist, und um die Ausgabe der Batterie (4) zu starten und die Motordrehzahl gemäß zunehmender Batterieausgabe zu einem Zeitpunkt zu senken, an dem die Restkapazität der Batterie (4) auf nicht weniger als der vorbestimmte Wert wiederhergestellt ist.

## Revendications

1. Appareil de commande de sortie destiné à un générateur d'énergie hybride, qui comprend une batterie (4) et un alternateur (3) entraîné par un moteur (2), l'appareil de commande de sortie destiné à un générateur d'énergie hybride comprenant :
une unité de conversion de puissance (5) à laquelle la sortie de la batterie (4) et la sortie de l'alternateur (3) sont reliées au côté d'entrée de l'unité de conversion de puissance (5) et une charge (6) est reliée au côté de sortie de l'unité de conversion de puissance (5) ;
une unité de détection de sortie de charge (26) qui est reliée au coté de sortie de l'unité de conversion de puissance (5) et qui détecte une sortie de charge (Pout) du générateur ;
une unité de détection de sortie de batterie (28) qui détecte une sortie (Pbat) de la batterie (4) ;
une unité de détection de sortie d'alternateur (27) qui détecte une sortie (Palt) de l'alternateur (3) ;
une première unité de calcul de différence de sortie (29) qui calcule une première différence (ΔP1) entre la sortie (Palt) de l'alternateur (3) et la sortie de charge (Pout) ;
une unité de définition de seuil (32) qui définit un seuil d'arrêt de sortie de la batterie (Pbat) ; et
un contrôleur (20) qui, lorsque la sortie de la batterie est supérieure au seuil d'arrêt de sortie de la batterie, fixe la sortie (Palt) de l'alternateur (3) à une valeur prédéterminée (25) et compense la première différence (ΔP1) par la sortie de la batterie (Pbat).

2. Appareil de commande de sortie destiné à un générateur d'énergie hybride selon la revendication 1, qui comprend en outre :
une seconde unité de calcul de différence de sortie (31) qui calcule une seconde différence (ΔP2) entre la sortie (Pbat) de la batterie (4) et la sortie de charge (Pout) ; et
le contrôleur qui comprend en outre un moyen qui, lorsque la sortie de la batterie (Pbat) est inférieure au seuil d'arrêt de sortie de la batterie, augmente la vitesse de rotation du moteur afin de compenser la seconde différence (ΔP2) par la sortie de l'alternateur (3) ;
dans lequel le contrôleur comprend un contrôleur de vitesse de rotation du moteur (20) qui, afin de compenser la seconde différence (ΔP2), fait converger la vitesse de rotation du moteur avec une valeur de vitesse de rotation du moteur cible déterminée à l'aide d'un second graphique (24) sur lequel une relation entre la seconde différence (ΔP2) et la valeur de vitesse de rotation du moteur cible (Netgt) est définie.

3. Appareil de commande de sortie destiné à un générateur d'énergie hybride selon la revendication 2, dans lequel l'unité de définition de seuil (32) est définie comme une durée d'activation de sortie de la batterie qui correspond au seuil d'arrêt de sortie de la batterie, la durée d'activation de sortie de la batterie étant définie par rapport à la sortie de la batterie sur un premier graphique (33) comme étant une valeur plus longue au fur et à mesure que la sortie de la batterie (Pbat) devient élevée, et le contrôleur est prévu pour augmenter la vitesse de rotation du moteur afin de compenser la seconde différence (ΔP2) lorsque la durée d'activation de la sortie de la batterie (Tass) s'est écoulée depuis le début de sortie de la batterie (4).

4. Appareil de commande de sortie destiné à un générateur d'énergie hybride selon la revendication 2, qui comprend : une unité de chargement (5) qui charge la batterie (4) à l'aide de la sortie de l'alternateur (3) ; et
une unité qui détecte une capacité restante de la batterie (4) ; et
dans lequel le contrôleur est prévu pour arrêter la sortie de la batterie (4) et pour augmenter la vitesse de rotation du moteur afin de charger la batterie (4) lorsque la capacité restante de la batterie (4) est inférieure à une valeur prédéterminée, et pour activer la sortie de la batterie (4) et réduire la vitesse de rotation du moteur selon l'augmentation de la sortie de la batterie à un moment auquel la capacité restante de la batterie (4) est rétablie à une valeur non inférieure à la valeur prédéterminée.

5. Appareil de commande de sortie destiné à un générateur d'énergie hybride selon la revendication 3, qui comprend : une unité de chargement (5) qui charge la batterie (4) à l'aide de la sortie de l'alternateur (3) ; et
une unité qui détecte la capacité restante de la batterie (4) ; et
dans lequel le contrôleur est prévu pour arrêter la sortie de la batterie (4) et pour augmenter la vitesse de rotation du moteur afin de charger la batterie (4) lorsque la capacité restante de la batterie (4) est inférieure à une valeur prédéterminée, et pour activer la sortie de la batterie (4) et réduire la vitesse de rotation du moteur selon l'augmentation de la sortie de la batterie à un moment auquel la capacité restante de la batterie (4) est rétablie à une valeur non inférieure à la valeur prédéterminée.
